# EUROPEAN PATENT SPECIFICATION

(11) **EP 3 616 246 B1**
(45) Date of publication and mention of the grant of the patent: **09.10.2024**
(21) Application number: 18726928.7
(22) Date of filing: 27.04.2018
(51) Int. Cl.: H01M 10/04, H01M 10/06, H01M 10/16, B29C 45/26, H01M 50/112

(54) **BATTERY CONTAINER**
BATTERIEBEHÄLTER
BAC DE BATTERIE

(30) Priority: 28.04.2017 LU 100178
(43) Date of publication of application: 04.03.2020
(73) Proprietor: Accumalux S.A., 1021 Luxembourg (LU)
(72) Inventor: THULL, Michael, 54456 Tawern (DE); FLAMENT, Michel, 5770 Weiler-la-Tour (LU)
(74) Representative: Marks & Clerk LLP
(86) International application number: PCT/EP2018/060952
(87) International publication number: WO 2018/197700

(56) References cited:
- EP-A1- 1 394 875
- EP-A1- 2 693 513
- EP-A2- 1 515 379
- WO-A1-01/28008
- DE-B3- 102007 030 652

## Description

### FIELD OF INVENTION

The present invention relates to a battery container suitable for accumulator batteries.

### BACKGROUND OF INVENTION

Batteries, such as accumulator batteries, are known to comprise a plurality of plates arranged to form at least one cell, and wherein the plurality of plates is contained within a container. The plurality of plates are typically organized within the container in an aligned and stacked or consecutive arrangement, and with adjacent plates separated by a separator. The plates may be submersed in an electrolytic liquid or gel within the container.

For example, such an arrangement may typically be used to form a lead-acid battery. Such batteries may be used in a range of environments and industries. A common use for such battery is as a component for an automotive vehicle. Other possible applications include industrial accumulator batteries as a temporary or permanent alternative to electrical generators.

Within an automotive application, batteries may be subject to extreme environmental conditions and charge cycles. Batteries may be subject to vibrations or other mechanical stresses, extremes of temperature and/or exposure to water, dirt or other chemicals such as abrasive fluids or chemicals. Batteries may also be subject to automotive life-cycles, which may span daily use over a period of several years.

As such, the containers are designed to be robust. The manufacturing process of such batteries requires assembly and/or insertion of the plurality of plates into the container. The plates may be fragile and/or malleable, relative to the container and, as such, may be prone to damage during the manufacturing process or during use in one of the aforementioned applications.

Containers, or packing/wrapping elements of the cell elements or plate packs generally comprise features or components suitable for holding the plates in a fixed position within the container, in use, to minimize the likelihood of damage to either the plates or the container. Such features must, however, also permit efficient assembly of a battery system.

Some of the abovementioned problems are exhibited in the invention described in US Patent No 7,816,028 B2 (Cesare Rivetta, Inzago), wherein an accumulator container is constituted by a box-like structure that comprises internally at least one containment cell for at least one plate and adaptable guides provided for inserting and fixing in position the at least one plate.

EP1394875 A1 generally relates to an improved container for accumulators equipped with one or more cells suitable for housing one or more elements of said accumulator and defined by walls of which at least one is equipped with at least one flexible support tab for said one or more elements, which substantially extends on a vertical plane and a least a portion of the longitudinal profile of said at least one support tab has a twist with respect to said vertical plane suitable for giving said desired flexibility to said at least one support tab.

EP2693513 A1 generally relates to a container for plates of a battery, the container being provided with a plurality of walls intersecting each other so as to define one or more adjacent cells suited to contain the plates. Each one of the cells is internally provided with one or more laminar elements made of an elastically deformable material that deforms laterally to a higher or lower extent depending on the number of plates, inserted in the container cell, with which it comes into contact. Said laminar element being shaped in such a way as to be provided with a plurality of convex portions and being constrained to the wall of the cell.

WO01/28008 generally discloses a composite battery container for housing one or more cell elements comprising plates with separator material that include a battery housing defining one or more cell compartments. The cell compartments have resilient, flexible spacer ribs integrally formed in the sides and bottom of the cell compartments. The flexible ribs elastically deform only when a cell element is disposed within the cell compartment and return to a substantially non-deformed, originally molded position when the cell element is removed.

EP1515379 A2 generally discloses an accumulator battery container, constituted by a box-like structure that comprises internally at least one containment cell being formed between opposite walls or between opposite walls and partitions of the container for at least one plate. It further comprises adaptable guiding means for inserting and fixing in position the at least one plate. The guiding means are constituted by flexible ridges which are shaped in traverse cross-section, substantially like a vertical tubular structure that has an elastically compliant behaviour with an omega-shaped transverse cross-section with feet that are connected to the corresponding wall of the respective containment cell. At the upper part of each flexible ridge, there is at least one flexible flap that is inclined toward the wall or partition from which the respective flexible ridge protrudes.

It is an object of at least one embodiment of at least one aspect of the present invention to seek to address one or more problems and/or disadvantages of the prior art.

### SUMMARY OF INVENTION

According to a first aspect of the present invention, there is provided a battery container having at least one compartment suitable for receiving one or more cell elements or plate packs or battery plates, wherein the at least one compartment has a pair of two opposing sidewalls and at least two guides or ribs arranged on a surface of at least one of the sidewalls, wherein the at least two guides or ribs extend from a respective sidewall to an end of the at least two guides or ribs distal from the wall and define at least one curved portion.

A surface of the at least one of the sidewalls comprises or are provided with at least two ribs, e.g. a pair of ribs.

Advantageously, each guide or rib has at least one curved portion in a direction extending from the inner surface a respective sidewall to a distalmost region or edge of each guide or rib. That is, when viewed along an axis that extends orthogonal to a substantially planar floor, each guide or rib has at least one curved portion in a direction extending from a respective sidewall to a distalmost region or edge of each rib which is distal from the sidewall. Typically, each guide or rib is curved in normal, relaxed or unloaded conditions, e.g. when no external object, e.g. cell elements or plate packs, is placed in the container and/or contacts the each guide or rib.

Without wishing to be bound by theory, it is believed that the provision of a pair of ribs which extend from a respective sidewall and define at least one curved portion offers improved mechanical properties to the guides or ribs, in use, particularly when the guides or ribs are flexed and/or subjected to stress. In particular, the curved portions may allow the guides or ribs to deform under stress over an increased area of the guides or ribs, thus reducing the force applied on a specific location of the guides or ribs, and/or reducing the likelihood of failure of the ribs. Further, in use, the provision of a curved portion, e.g. at a distalmost edge of the guides or ribs relative to a respective wall, may help minimise the risk of damage to one or more cell elements contacting the ribs.

Hereinafter, the terms "guide" and "guides" are used in reference to "guide or rib" and "guides or ribs" respectively.

Hereinafter, the term "cell elements" is used in reference to "cell elements, plate packs or battery plates".

The use of the terms "lower" and "upper" are intended to indicate general positions of features of the battery container for example relative to a bottom/floor portion thereof or relative to a top portion thereof, as would be interpreted by one of skill in the art, and are not intended to be limiting in a strict geometric sense. For example, depending upon the position of the battery container, an upper portion may be below a lower portion.

Typically, the at least one compartment has a floor which extend between a lower end of the sidewalls. The floor is substantially planar and/or continuous/solid. At least a portion of a lower end or edge of each guide or rib does not extend the planar floor.

Typically, each guide extends in a direction orthogonal to the floor.

The floor may be connected to or may extend to a lower edge of each of the opposite sidewalls of the at least one compartment.

The guides may be attached to, connected to or fixed to a respective sidewall. The guides may be detachably attached to, connected to or fixed to a respective sidewall by mechanical means such as screws, rivets, interference connections, push fits, clips or the like. The guides may be permanently attached to, connected to or fixed to a respective sidewall by chemical means such as an adhesive or glue, or by fusion of the guides with a respective sidewall. The guides may be formed unitary with a respective sidewall during manufacture of the container, for example by injection moulding.

The at least one compartment may comprise a plurality of pairs of guides. Advantageously, the at least one compartment may have two pairs of guides, one pair of guides being located one a respective sidewall and the other pair of guides being located on an opposing sidewall. By such provision, in use, a battery unit may be placed within the at least one compartment and may be held in place between both pairs of guides.

The at least one compartment may comprise a plurality of guides or ribs. At least one guide or rib may be located one a respective sidewall and the other at least one guide or rib may be located on an opposing sidewall.

In some embodiments, the at least one compartment may have one or more pairs of guides on one or more sidewalls, e.g. on each of two opposite sidewalls. The sidewalls may collectively define an inner surface of the at least one compartment. A container or compartment comprises four sidewalls. The surface of one of the four sidewalls may form an inner surface of the at least one compartment. The sidewalls is substantially planar. The sidewalls are arranged at right angles to one another, such that the container is substantially square or rectangular when viewed in a plan view from above. The container may form a substantially cuboid shape. An exterior surface of the container may comprise additional fixings, flanges, ribs, rims and/or attachments. The external shape of the container may be standardized. That is, the external shape may be arranged, configured or adapted to conform to a standard, such as an industry standard or common or generally accepted standard. The external shape of the container may be configured or optimized for stacking and/or packing of a plurality of containers together and/or in close proximity. The battery container may further comprise at least one partition arranged to partition the battery container into at least two compartments. The partition may form an inner surface or sidewall of the at least two compartments. The battery container may further comprise one or a plurality of partitions. The battery container may comprise a plurality of partitions arranged such that battery container comprises six compartments. The at least one partition may be formed as part of the container, or the at least one partition may be a separate component that, in use, is attached, affixed and/or located within the container.

The container may be at least partially constructed from a material comprising at least one of: a polymeric material; a plastics material; and/or a composite material. The material may be selected to withstand mechanical stresses, such as impacts, vibrations, internal pressures or the likes. The material may be selected to withstand exposure to fluids, such as water or other chemicals such as abrasive fluids or oils. The material may be a thermoplastic, or a thermosetting plastic. The material may be chemically inert.

The container may comprise at least one further rib. The at least one further rib may be located on at least one sidewall of the container. The at least one further rib may be located on at least one partition. The at least one further rib may be located between each guide of a pair of guides. The at least one further rib may be located between two pairs of guides. A plurality of further ribs may be located at intervals along at least one of the four sidewalls. At least two further ribs may be arranged in pairs. A plurality of pairs of further ribs may be located at intervals along at least one of the four sidewalls. The at least one further rib may be arranged to protrude from and/or extend from the inner surface. The at least one further rib may extend in a direction orthogonal to the planar floor. A lower end of the at least one further rib may extend to the planar floor. An upper end of the at least one further rib may not extend to an upper edge of the container or of the inner surface. An upper end of the at least one further rib may be tapered, curved or chamfered. An upper end of the at least one further rib may taper or curve inwards towards the inner surface.

At least a pair of further ribs may be arranged to accommodate an element to be integrated into the battery container for the purposes of stabilizing at least one battery or cell, or a plurality of plates, positioned within the container.

Each guide, e.g. each guide of a pair of guides, may be adapted to flex or undergo elastic deformation upon insertion of at least one cell element and/or plate and/or cell into the container. At least a portion of a lower end or edge of each guide does not extend to the planar floor. The portion of the lower end or edge of each guide which does not extend to the planar floor may represent or may form less than or equal to 20%, e.g. less than or equal to 10%, e.g. less than or equal to 5%, of the total length or height of the guide. The portion of the lower end or edge of each guide which does not extend to the planar floor may define a gap between the lower end of the guide and the floor or bottom of the compartment. The length of the gap may be less than or equal to 20%, e.g. less than or equal to 10%, e.g. less than or equal to 5%, of the distance between an uppermost portion of the guide and the floor or bottom of the compartment.

Each guide may be arranged to protrude from and/or extend from the inner surface. At least one guide may be arranged to protrude from and/or extend from the inner surface at an angle of between 90 degrees and 45 degrees from the surface e.g. at the point of contact/connection between the guide(s) and the inner surface. At least one guide may be arranged to protrude from and/or extend from the inner surface at an angle of between 80 degrees and 60 degrees from the surface. Beneficially, such an arrangement serves to direct a general direction of deformation each guide.

In use, each guide of a pair of guides may be adapted to flex or undergo elastic deformation in a direction opposite to the direction of flexing or elastic deformation of the other of the pair of guides. Each guide of the pair of guides may be adapted to curve away from the other guide of the pair of guides. Such an arrangement also prevents one guide of the pair of guides from coming into contact with the other guide of the pair of guides. Additionally, as the guides flex or deform upon insertion of a cell element or the likes, into the container, the points of contact between the pair of guides and the battery or the likes tend away from one another. Such an arrangement decreases the likelihood that a cell element with a substantially planar surface may not remain parallel to the inner surface.

Alternatively, or additionally, each guide of a pair of guides may be adapted to curve towards the other guide of the pair of guides. As such, each pair of guides may be
The at least one curved portion may be arranged at the distalmost edge of each guide. The at least one curved portion may be arranged at a base of each guide. The at least one curved portion may be arranged at a point between the base and the distalmost edge of each guide. Each guide may comprise a plurality of curved portions arranged at at least one of: a distalmost edge of each guide; a base of each guide; and a point between the base and a distalmost edge of each guide. The at least one curved portion may be curved to an extent that an angular change in a direction of extension of each guide from the inner surface is between 30 and 120 degrees. The at least one curved portion may be curved to an extent that an angular change in a direction of extension of each guide from the inner surface is between 50 and 90 degrees.

Beneficially, the provision of at least one curved portion on each guide and/or a lower edge of each guide that does not extend to the planar floor may result in a guide that is more flexible and exhibits a greater degree or amount of flexing and/or deformation than a comparable guide without at least one curved portion over a defined ranges of applied forces. For example, when subjected to forces of up to approximately 300 to 500N, two pairs of guides with the at least one curved portion on each guide may deform by approximately 2 to 8mm. A comparable arrangement of guides without the at least one curved portion and/or wherein a lower edge of each guide of each pair of guides does extend to the planar floor may require application of forces in the region of 300 to 600N to deform by approximately 2 to 8mm.

Further, the provision of at least one curved portion on each guide may permit a greater degree or amount of flexing and/or deformation of each in response to a defined range of applied forces due to insertion of a cell element or the likes into the container. For example, a force required to deform two pairs of guides by approximately 10mm may be in the region of 2000N. A comparable arrangement of guides without the at least one curved portion and/or wherein a lower edge of each guide of each pair of guides does extend to the planar floor may require application of considerably greater forces, such as forces in excess of 5000N, to achieve a similar degree of deformation. As such, the provision of at least one curved portion on each guide of the pair of guides permits a tighter packing of plates, cell element(s) or the likes into the container, without requiring undue forces to be applied.

As such, an active damping function of the guides may be improved, especially when installing large cell elements that generate a high compression rate of the guides.

Each guide may comprise at least one substantially straight portion.

A guide may be arranged symmetrically along an axis which is orthogonal to the planar floor relative to another guide, For example one guide of the/a pair of guides may be arranged symmetrically with the other guide of the pair of guides along an axis which is orthogonal to the planar floor. One guide of the pair of guides may be arranged asymmetrically with the other guide of the pair of guides along an axis which is orthogonal to the planar floor. Each guide of the pair of guides may be arranged to extend or curve away from the other guide of the pair of guides. Each guide of the pair of guides may be arranged to extend or curve towards the other guide of the pair of guides.

A lower edge of each guide may not extend to the planar floor. Beneficially, such an arrangement permits a greater degree of flexibility of a lower portion in the vicinity of the lower edge of each guide than if the lower edge of each guide extends, and is attached, to the planar floor. Further, such an arrangement makes is easier to implement a guide exhibiting a relatively uniform degree of flexibility towards a lower edge of the guide. The portion of the lower end or edge of each guide which may not extend to the planar floor may represent or may form less than or equal to 20%, e.g. less than or equal to 10%, e.g. less than or equal to 5%, of the total length or height of the guide. The portion of the lower end or edge of each guide which may not extend to the planar floor may define a gap between the lower end of the guide and the floor or bottom of the compartment. The length of the gap may be less than or equal to 20%, e.g. less than or equal to 10%, e.g. less than or equal to 5%, of the distance between an uppermost portion of the guide and the floor or bottom of the compartment.

At least one guide or rib, typically each guide or rib, may be provided separate or distinct from one or more other guides or ribs, typically from the other guides or ribs. Each guide or ribs may be individually or separately provided or arranged on a surface of at least one of the sidewalls. At least one guide or rib, typically each guide or rib, may not contact or interfere with one or more other guides or ribs, typically with the other guides or ribs.

In normal, relaxed or unloaded conditions, at least one guide or rib, typically each guide or rib, may contact a surface of at least one sidewall via one of its ends, e.g. its base. In other words, only one end, e.g. base, of a/each guide or rib may be in contact with a respective sidewall.

A guide may be arranged to be opposite another guide within the at least one compartment. A pair of guides may be arranged to be opposite another pair of guides
A lower edge of each guide may not extend to the planar floor. Beneficially, such an arrangement permits a greater degree of flexibility of a lower portion in the vicinity of the lower edge of each guide than if the lower edge of each guide extends, and is attached, to the planar floor. Further, such an arrangement makes is easier to implement a guide exhibiting a relatively uniform degree of flexibility towards a lower edge of the guide. The portion of the lower end or edge of each guide which may not extend to the planar floor may represent or may form less than or equal to 20%, e.g. less than or equal to 10%, e.g. less than or equal to 5%, of the total length or height of the guide. The portion of the lower end or edge of each guide which may not extend to the planar floor may define a gap between the lower end of the guide and the floor or bottom of the compartment. The length of the gap may be less than or equal to 20%, e.g. less than or equal to 10%, e.g. less than or equal to 5%, of the distance between an uppermost portion of the guide and the floor or bottom of the compartment.

At least one guide or rib, typically each guide or rib, may be provided separate or distinct from one or more other guides or ribs, typically from the other guides or ribs. Each guide or ribs may be individually or separately provided or arranged on a surface of at least one of the sidewalls. At least one guide or rib, typically each guide or rib, may not contact or interfere with one or more other guides or ribs, typically with the other guides or ribs.

In normal, relaxed or unloaded conditions, at least one guide or rib, typically each guide or rib, contacts a surface of at least one sidewall via one of its ends, e.g. its base. In other words, only one end, e.g. base, of a/each guide or rib is in contact with a respective sidewall.

A guide may be arranged to be opposite another guide within the at least one compartment. A pair of guides may be arranged to be opposite another pair of guides within the at least one compartment. A plurality of pairs of guides may be arranged on the inner surface.

According to a second aspect of the present invention, there is provided a battery container having at least one compartment suitable for receiving one or more cell elements, wherein the at least one compartment has a pair of opposing sidewalls, a floor which extends between a lower end of the sidewalls, and at least two guides or ribs arranged on a surface of one of the sidewalls, wherein at least a portion of a lower end or edge of the at least one guide or rib does not extend the planar floor.

Advantageously, such an arrangement allows the guide or rib to deform, e.g. elastically deform, such that the deformation is substantially uniform along a full length of the guide. Further, such an arrangement may result in a guide that is more flexible and exhibits a greater degree or amount of flexing and/or deformation than a guide wherein all of the lower end or edge extends to and/or is attached to the planar floor. Beneficially, the provision of at least two guides or ribs arranged such that at least a portion of a lower end or edge of each guide or rib does not extend the planar floor permits a tighter packing of plates, cell element(s) or the likes into the container, without requiring undue forces to be applied.

Each guide or rib extends from a respective sidewall and defines at least one curved portion. Each guide or rib has at least one curved portion in a direction extending from a respective sidewall to a distalmost region or edge of each rib.

According to a third aspect of the present invention, there is provided a method of constructing a battery container according to the first or second aspects, the method comprising forming the battery container within or over a mould.

The container may be manufactured as a monolithic structure. The manufacturing method may comprise at least one of: injection moulding; printing; casting; vacuum forming; blow moulding; or rotational moulding.

### BRIEF DESCRIPTION OF DRAWINGS

These and other aspects will now be described, by way of example only, with reference to the accompanying drawings, which:
- **Figure 1**: an isometric view of a portion of a battery container according to a first embodiment of the present invention;
- **Figure 2**: a further isometric view of another portion of the embodiment shown in figure 1;
- **Figure 3**: a plan view of the embodiment shown in figure 2;
- **Figure 4**: a cross-sectional view of the battery container of figure 2;
- **Figure 5**: a partial cut-away view of the battery container of figure 2, viewed from an end of the container;
- **Figure 6**: a perspective view of the rear of the living accommodation of the embodiment shown in figure 2;
- **Figure 7**: a further plan view of the embodiment shown in figure 2;
- **Figure 8**: a magnified portion of the further plan view of figure 7;
- **Figure 22**: a plan view of the embodiment shown in figure 21;
- **Figure 23**: an isometric view of a portion of a battery container according to another embodiment of the present invention; and
- **Figure 24**: a plan view of the embodiment shown in figure 23.

### DETAILED DESCRIPTION OF DRAWINGS

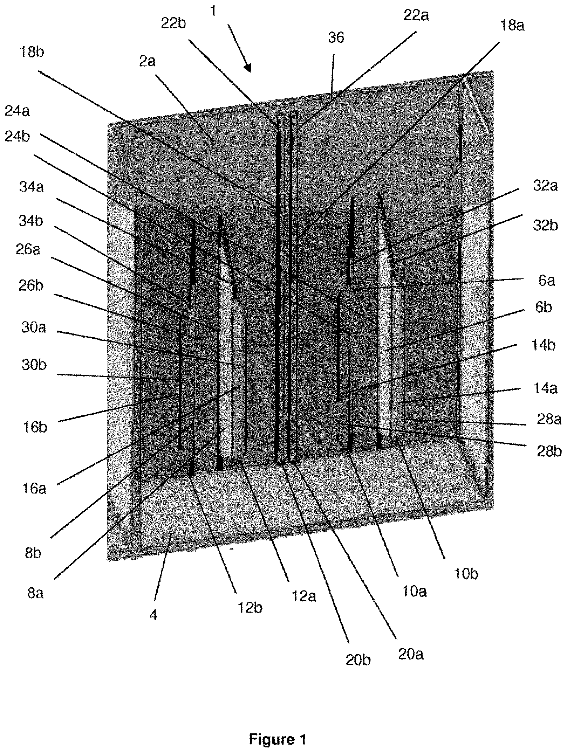

Referring firstly to Figure 1 of the accompanying drawings, there is shown an isometric view of a portion of a battery container 1 according to a first embodiment of the present invention. The container 1 has a sidewall 2a and a substantially planar floor 4. On the sidewall 2a, two pairs of guides 6a, 6b, 8a, 8b are arranged on an inner surface of the sidewall 2a. The substantially planar floor 4 extends to a lower edge of the sidewall 2a to form a compartment. Each guide 6a, 6b, 8a, 8b extends in a direction orthogonal to the planar floor 4. A portion of a lower end 10a, 10b, 12a, 12b of each guide 6a, 6b, 8a, 8b does not extend to the planar floor 4. Each guide 6a, 6b, 8a, 8b comprises a curved portion 14a 14b, 16a, 16b.

There is also shown a pair of further ribs 18a, 18b. The pair of further ribs 18a, 18b are located on the sidewall 2a of the container. The pair of further ribs 18a 18b is located between two pairs of guides 6a, 6b, 8a, 8b. The further ribs protrude from the inner surface of the sidewall 2a and the further ribs 18a, 18b extend along the sidewall 2a in a direction orthogonal to the planar floor 4. Lower ends 20a, 20b of the pair of further ribs extend to the planar floor 4. Upper ends of the pair of further ribs 22a, 22b do not extend to an upper edge 36 of the container 1. The upper end 22a, 22b of the pair of ribs tapers inwards towards the inner surface of the sidewall 2a. One of skill in the art would understand that in other embodiments encompassing the present inventive concept, the further ribs may not be present.

In the exemplary embodiment shown in figure 1, the two pairs of guides 6a, 6b, 8a, 8b are arranged to extend from an inner surface of the sidewall 2a at an acute angle of approximately 60 to 70 degrees from the surface. It will be appreciated by one of skill in the art that in other embodiments encompassing the same inventive concepts, the acute angle may be greater or smaller.

A straight edge of each guide of the pair of guides 6a, 6b, 8a, 8b is a base 24a, 24b, 26a, 26b of each guide, and adjoins the inner surface. The straight edge/base of each guide of the pair of guides 6a, 6b, 8a, 8b is the longest straight edge of each guide of the pair of guides 6a, 6b, 8a, 8b.

Although in the embodiment shown the guides are of uniform thickness, it will be appreciated by one of skill in the art that in other embodiments encompassing the same inventive concepts, each guide of the pair of guides 6a, 6b, 8a, 8b may be substantially thicker at the base 24a, 24b, 26a, 26b than at a distalmost edge 28a, 28b, 30a, 30b. As such, a position of a primary point of flexing or deformation of the pair of guides 6a, 6b, 8a, 8b can be selected to be toward a distalmost edge 28a, 28b, 30a, 30b and/or away from the base of the guide 24a, 24b, 26a, 26b. Similarly, it will be appreciated that in other embodiments of the present invention, the thickness of each guide of the pair of guides 6a, 6b, 8a, 8b can be varied such that a degree of flexing or deformation of each guide of the pair of guides is distributed across a length of the guide in a defined and predetermined manner, for example uniformly.

An upper end 32a, 32b, 34a, 34b of each guide of the pair of guides 6a, 6b, 8a, 8b is tapered. An upper end 32a, 32b, 34a, 34b of each guide of the pair of guides 6a, 6b, 8a, 8b tapers inwards towards the inner surface. An upper end 32a, 32b, 34a, 34b of each guide of the pair of guides 6a, 6b, 8a, 8b is adapted to not extend to an upper edge 36 of the container. Such an arrangement eases the positioning of a battery, or the likes, into the container, and serves to guide one or more cell elements or the likes towards a desired location within the container during insertion of the cell element(s)or the likes into the container.

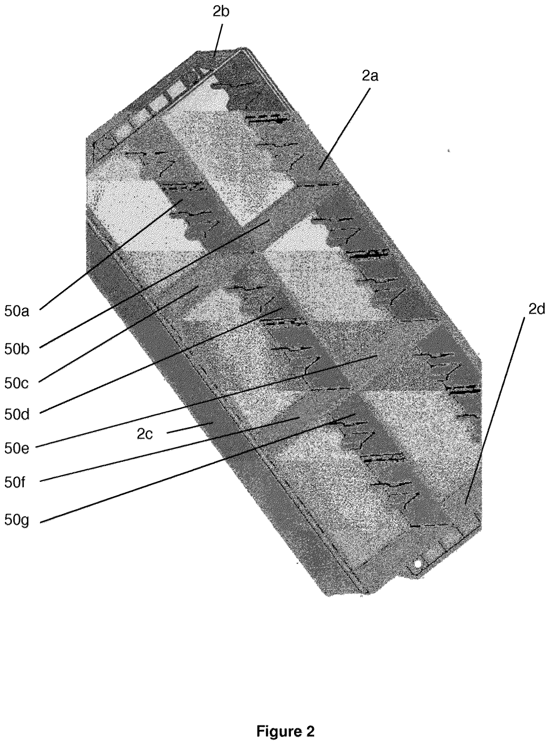

Referring to Figure 2 of the accompanying drawings, there is shown a further isometric view of another portion of the embodiment shown in figure 1. It can be seen that the sidewalls 2a, 2b, 2c, 2d are arranged at right angles to one another, such that the container is substantially rectangular when viewed in a plan view from above.

The container forms a substantially cuboid shape. The battery container comprises a plurality of partitions 50a-g, the partitions 50a-g arranged such that, in this embodiment, the battery container comprises six compartments.

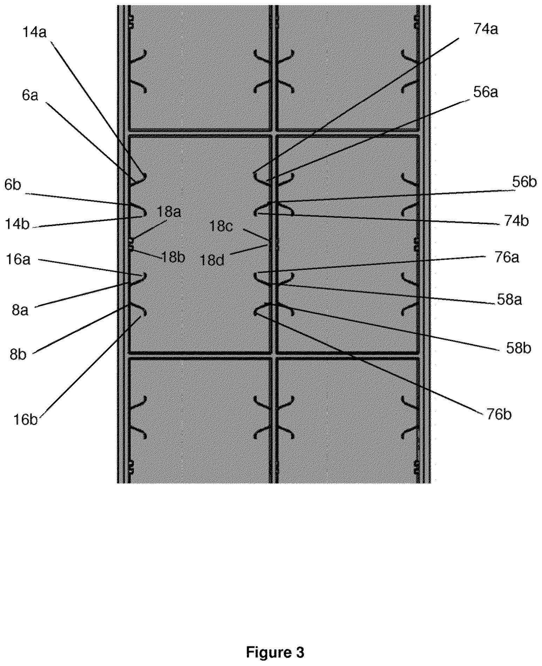

Referring to Figure 3 of the accompanying drawings, there is shown a portion of a plan view of the embodiment shown in figure 2. Each compartment comprises a total of 8 guides 6a, 6b, 8a, 8b, 56a, 56b, 58a, 58b and 4 further ribs 18a, 18b, 60a, 60b. Each guide comprises a curved portion. The curved portions 14a, 14b, 16a, 16b, 74a, 74b, 76a, 76b are arranged towards the distalmost edge of each guide of each pair of guides 6a, 6b, 8a, 8b, 56a, 56b, 58a, 58b. One of skill in the art would recognise that in other embodiments encompassing the inventive concept of the present invention, the curved portions 14a, 14b, 16a, 16b 54a, 54b, 56a, 56b can be arranged at a point between the base and the distalmost edge of each guide of the pair of guides 6a, 6b, 8a, 8b, 56a, 56b, 58a, 58b. Further, in further embodiments, each guide of the pair of guides 6a, 6b, 8a, 8b, 56a, 56b, 58a, 58b may comprise a plurality of curved portions arranged at a distalmost edge of each guide of the pair of guides or at a point between the base and a distalmost edge of each guide of the pair of guides.

The degree of curvature each curved portion 14a, 14b, 16a, 16b, 74a, 74b, 76a, 76b of each guide of each pair of guides 6a, 6b, 8a, 8b, 56a, 56b, 58a, 58b is approximately 60-70 degrees. A radius of curvature of each curved portion 14a, 14b, 16a, 16b, 74a, 74b, 76a, 76b of each guide of the pair of guides 6a, 6b, 8a, 8b, 56a, 56b, 58a, 58b is between 0.5 and 10 millimetres. Each curved portion 14a, 14b, 16a, 16b, 74a, 74b, 76a, 76b is curved to an extent that an angular change in a direction of extension of each guide of the pair of guides 6a, 6b, 8a, 8b, 56a, 56b, 58a, 58b from the inner surface is designed to exhibit a curved portion in contact with the cell elements preferably parallel to the inner surface. One guide 6a, 8a, 56a, 58a of each pair of guides is arranged to extend or curve away from the other guide 6b, 8b, 56b, 58b of each pair of guides.

Also, each guide of each pair of guides 6a, 6b, 8a, 8b, 56a, 56b, 58a, 58b comprises a substantially straight portion located between the curved portion 14a, 14b, 16a, 16b, 74a, 74b, 76a, 76b and a base of each guide.

Each pair of guides is arranged to be directly opposite another pair of guides. By such provision, a tendency for a battery, plates or the likes to pivot or rock on the guides in use is reduced. Further, such an arrangement ensures a correct orientation of the battery, plates or the likes, such as parallel to a sidewall of the container, is maintained in use.

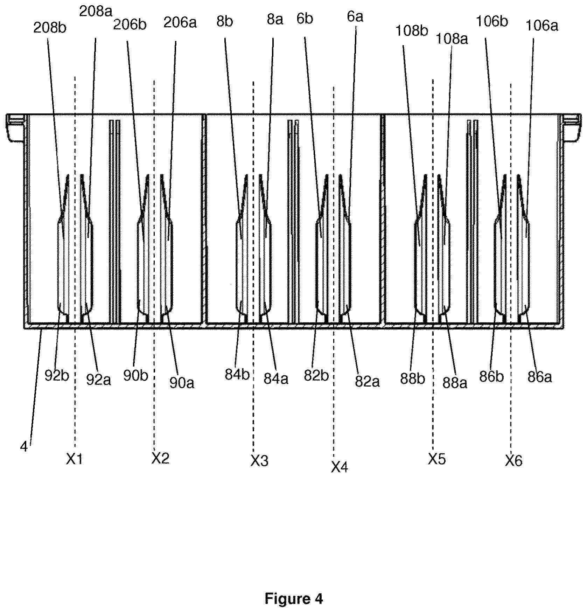

Referring to Figure 4 of the accompanying drawings, there is shown a cross-sectional view of the battery container of figure 2. One guide 6a, 8a, 106a, 108a, 206a, 208a of each pair of guides is arranged symmetrically with the other guide 6b, 8b, 106b, 108b, 206b, 208b of each pair of guides along an axis X1-6 which is orthogonal to the planar floor 4.

A lower edge 82a, 82b, 84a, 84b, 86a, 86b, 88a, 88b, 90a, 90b, 92a, 92b of each guide of the pair of guides 6a, 6b, 8a, 8b, 106a, 106b, 108a, 108b, 206a, 206b, 208a, 208b does not extend to the planar floor 4.

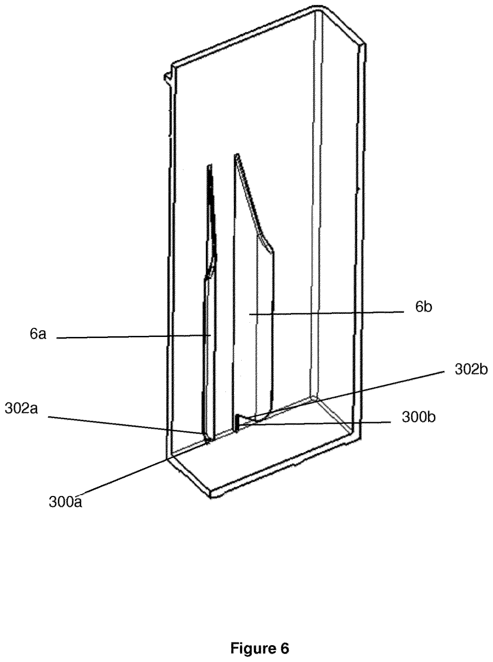

As can be seen in the exemplary embodiment of figure 4, a ridge extends from the lower edge 82a, 82b, 84a, 84b, 86a, 86b, 88a, 88b, 90a, 90b, 92a, 92b of each guide of the pair of guides 6a, 6b, 8a, 8b, 106a, 106b, 108a, 108b, 206a, 206b, 208a, 208b to the planar floor 4, as will be described in more detail with reference to figure 6.

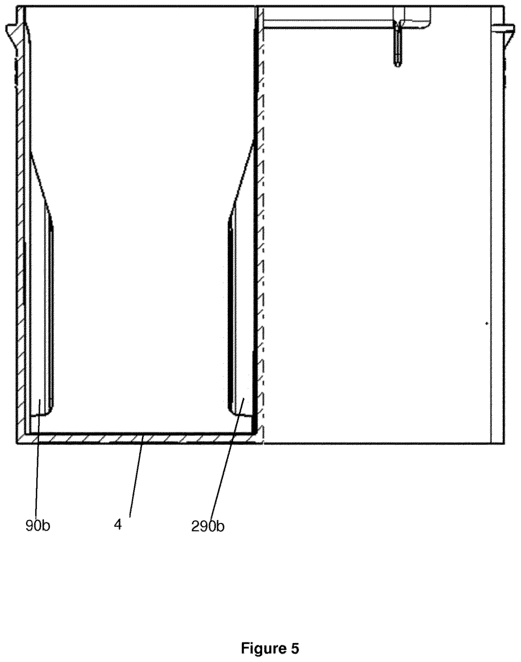

Figure 5 shows a partial cut-away view of the battery container of figure 2, viewed from an end of the container, wherein a lower edge 90b, 290b does not extend to the substantially planar floor 4.

Figure 6 shows a perspective view of the embodiment shown in figure 2, and more clearly shows the ridges 300a, 300b. The ridges 300a, 300b extend from the planar floor 4 to the portion of the lower end or edge 302a, 302b of each guide the pair of guides 6a, 6b that does not extend the planar floor 4.

The ridges 300a, 300b provide structural integrity and/or serve to stiffen the guide. Advantageously, such an arrangement results in a force applied to the guides, for example a force exerted upon the guides by insertion of a battery into the battery container, being more evenly distributed in the sidewall of the container. Further, such a force is also guided towards the floor of the container. Thus the force is distributed over a larger area than would be if the ridges were not present.

Advantageously, such ridges 300a, 300b also increase an overall stiffness of the sidewalls of the container.

Further, during a moulding process, the provision of such ridges 300a, 300b improve the filling of the guide with material, because material may flow into a space within a mould defining the guides from a floor of the container, wherein the floor of the container comprises injection points.

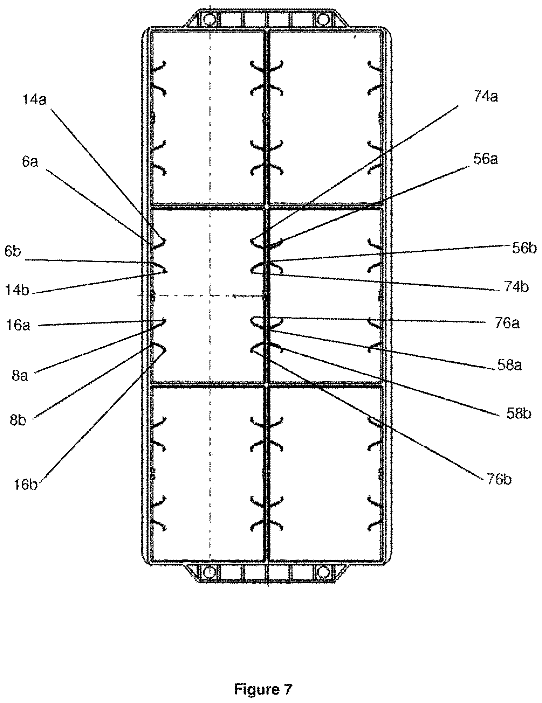

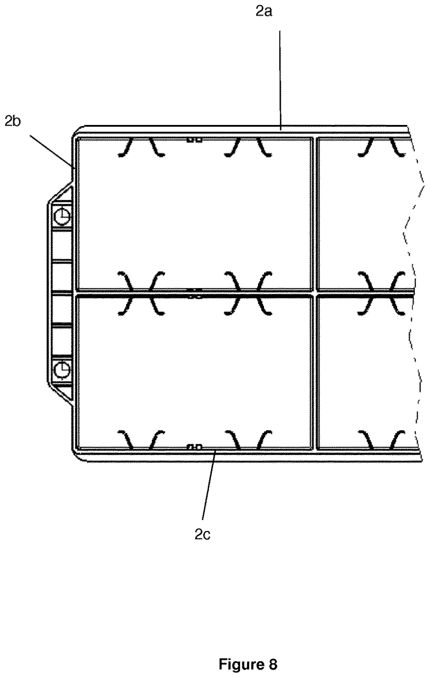

Figures 7 and 8 show a further a further plan view of the embodiment shown in figure 2 and a magnified portion of the further plan view of figure 7 respectively.

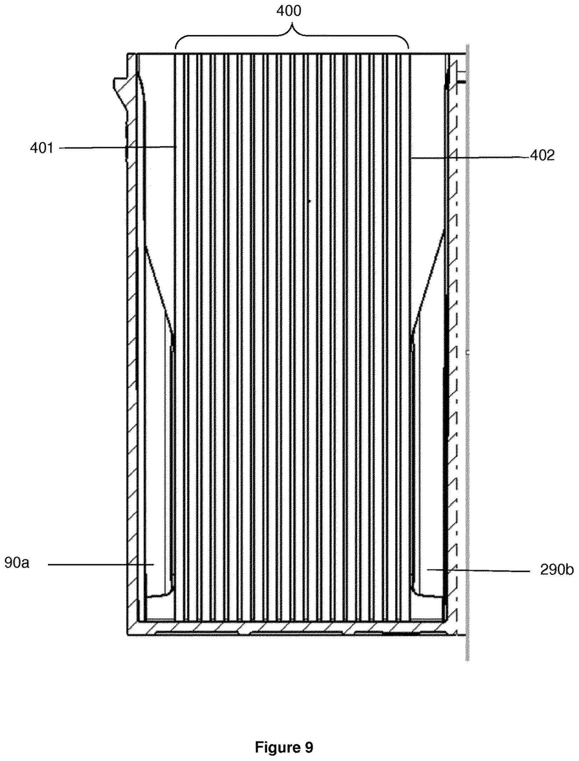

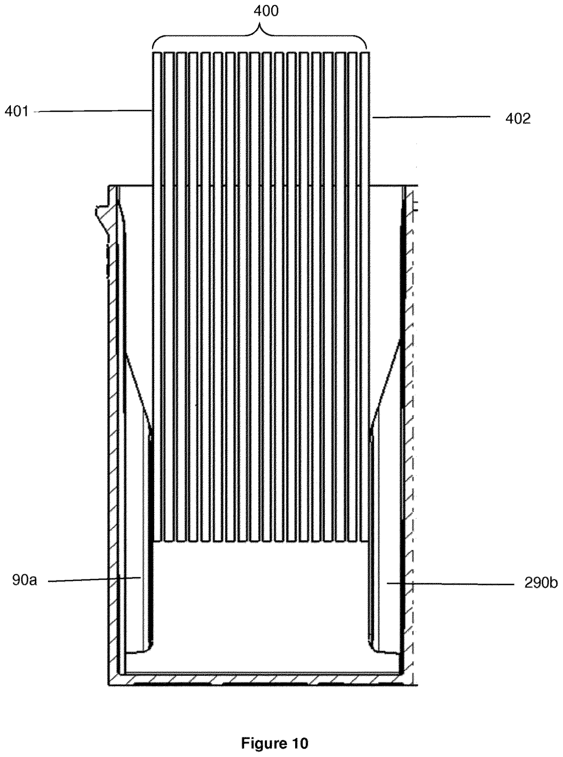

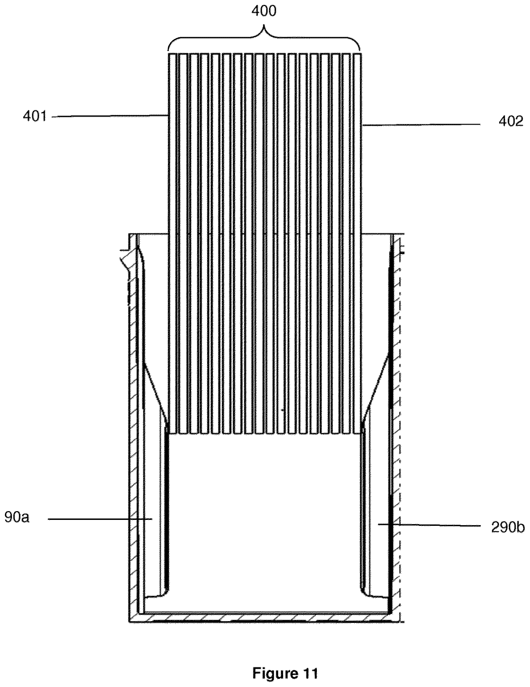

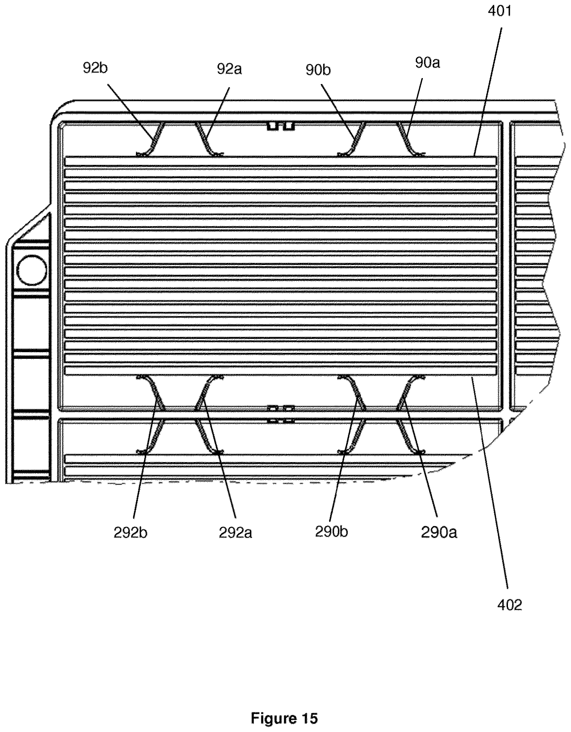

Figure 9 shows a cross-sectional view of the first embodiment of the present invention, with plates 400 inserted. Although figure 9 shows 18 plates, one of skill in the art would recognise that a lesser or greater quantity of plates may be present. Similarly, the dimensions of the plates relative to the container are provided for example purposes only. In the embodiment shown, the guides 90b, 290b are in contact with an outer surface 401, 402 of the outmost plates. Figure 15 shows a plan view of the embodiment of figure 9. Figures 10 and 11 show the embodiment of figure 9, with the plates 400 at different stages of insertion/removal.

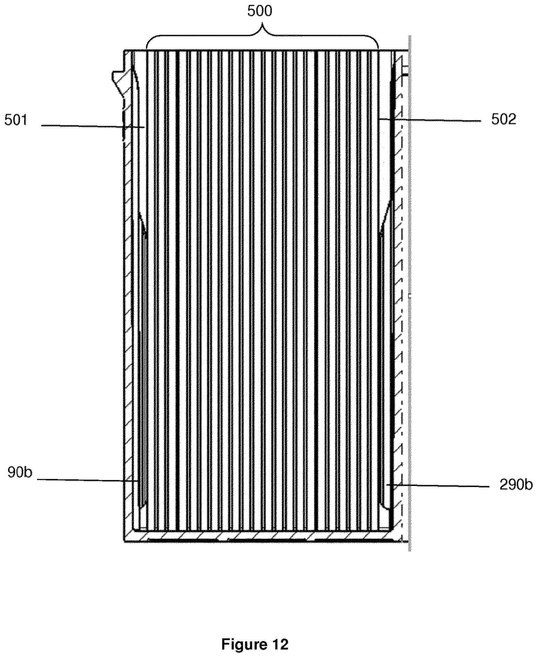

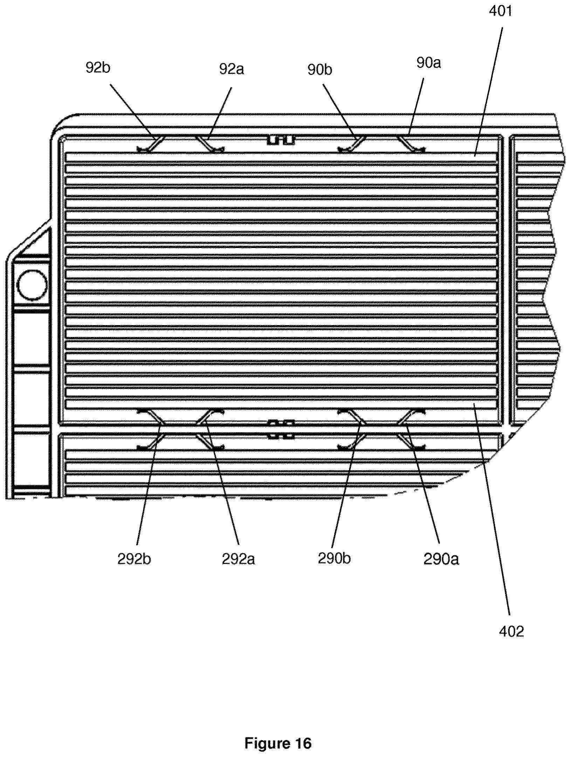

Figure 12 shows a cross-sectional view of the first embodiment of the present invention, with plates 500 inserted. Similarly, although figure 12 shows 21 plates, one of skill in the art would recognise that a lesser or greater quantity of plates may be present. In the embodiment shown, the guides 92b, 292b are in contact with an outer surface 501, 502 of the outmost plates. Each guide of the pair of guides 92b, 292b has undergone elastic deformation upon insertion of the plates 500. Figure 16 shows a plan view of embodiment of figure 12.

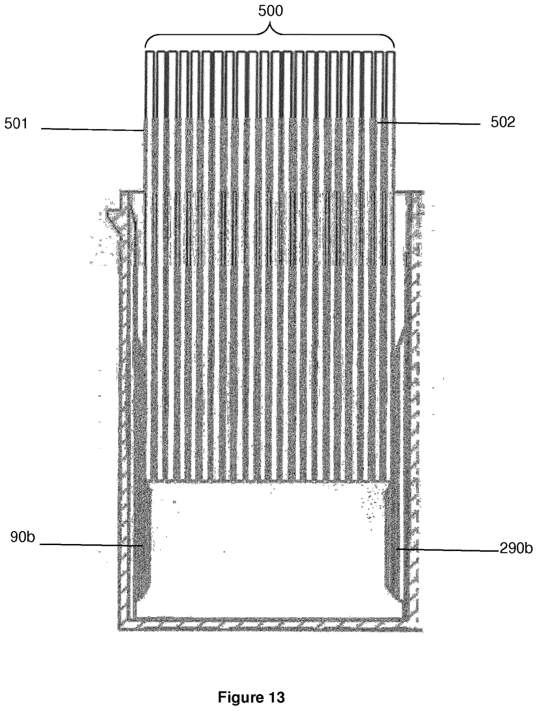

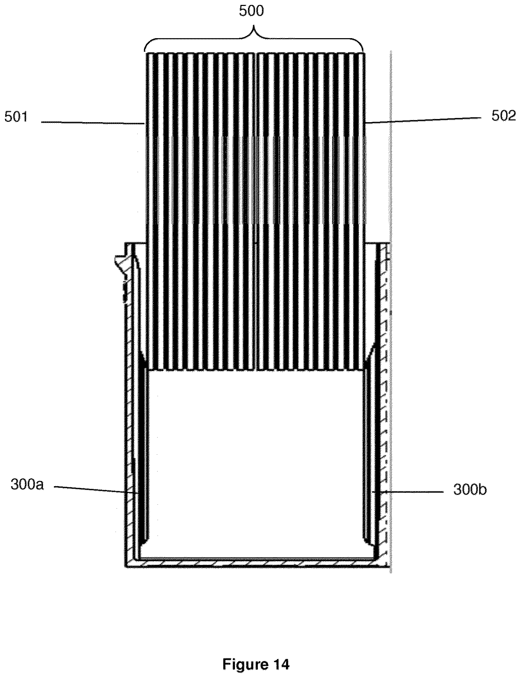

Figure 13 shows an exemplary embodiment of the present invention, wherein the plates 500 are partially inserted into the container. At least a portion of each guide 90b, 290b has undergone elastic deformation to accommodate the plates within the container. In an alternative embodiment shown in figure 14, each guide 300a, 300b is adapted to deform such that the deformation is substantially uniform along a full length of the guide.

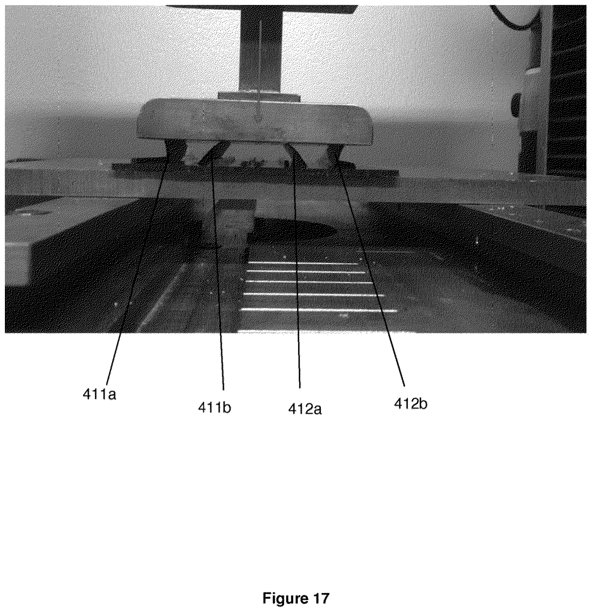

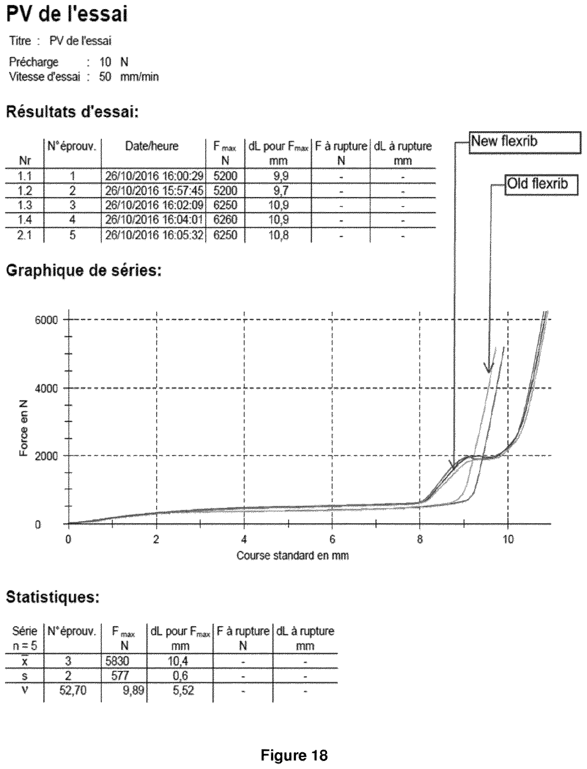

Figure 17 shows a photo of the process of compression testing the guides 411a, 411b, 412a, 412b according to an exemplary embodiment of the present invention; and figure 18 shows the data resultant from the compression test shown. The label "Old Flexrib" corresponds to 'standard' guides that are known in the art, wherein the guides are substantially straight and do not comprise at least one curved portion and a lower edge of each guide does extend to the planar floor. The label "New FlexRib" corresponds to the present invention.

It can be seen that, the features of the guides interact synergistically to result in a guide that is more flexible and exhibits a greater degree or amount of flexing and/or deformation than a comparable guide without at least one curved portion over a defined ranges of applied forces. For example, when subjected to forces of up to approximately 300 to 500N, two pairs of guides with the at least one curved portion on each guide deform by a distance of approximately 2 to 8mm towards the planar floor. A comparable arrangement of guides without the at least one curved portion and/or wherein a lower edge of each guide of each pair of guides does extend to the planar floor may require application of forces in the region of 300 to 600N to deform by approximately 2 to 8mm towards the planar floor.

It can be seen in the graph of force versus distance that the present invention results in a knee in the force versus distance curve. The effect of this knee, in the specific embodiment shown, is that a force required to deform two pairs of guides by approximately 10mm towards the planar floor is in the region of 2000N. A comparable arrangement of guides without the at least one curved portion and/or wherein a lower edge of each guide of each pair of guides does extend to the planar floor, requires application of considerably greater forces, such as forces in excess of 5000N, to achieve a similar degree of deformation. As such, the provision of at least one curved portion on each guide of the pair of guides permits a tighter packing of plates, cells, cell elements or the likes into the container, without requiring undue forces to be applied.

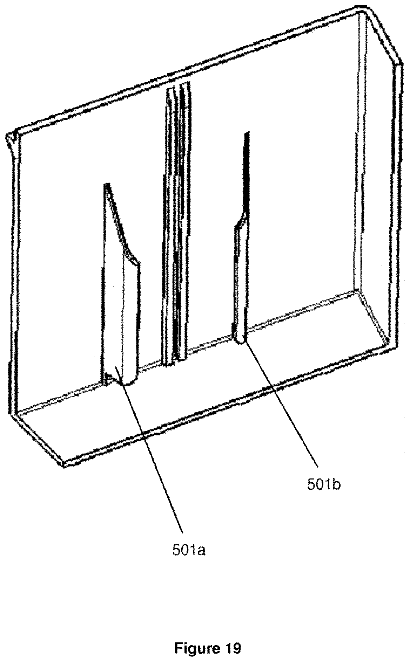

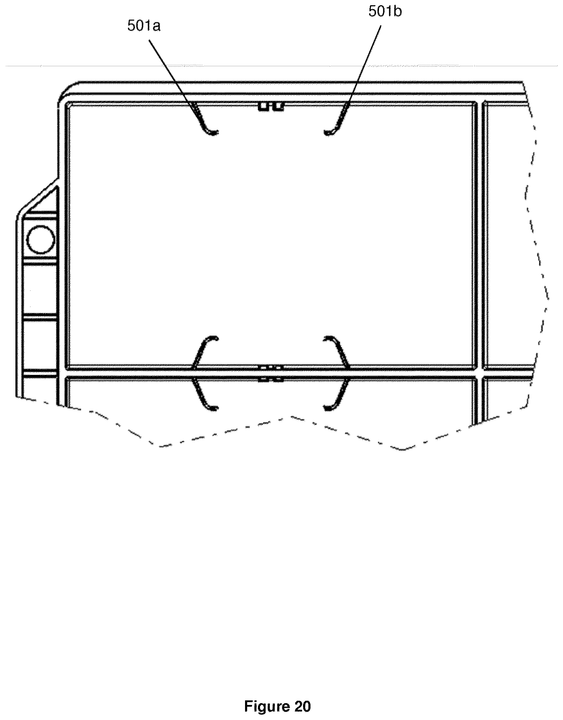

Referring to figure 19 of the accompanying drawings, there is shown an isometric view of a portion of a battery container according to another embodiment of the present invention. Figure 20 shows a plan view of the embodiment shown in figure 19. In this embodiment, each compartment comprises a single pair of guides 501a, 501b on each sidewall/partition of a pair of opposing sidewalls/partitions. The guides 501a, 501b are adapted such that each guide of the pair of guides 501a, 501b is adapted to curve towards the other guide of the pair of guides 501a, 501b. As such, the pair of guides 501a, 501b is adapted such that, as the guides flex or deform upon insertion of a battery or the likes, the points of contact between the pair of guides 501a, 501b and the battery or the likes will tend towards one another.

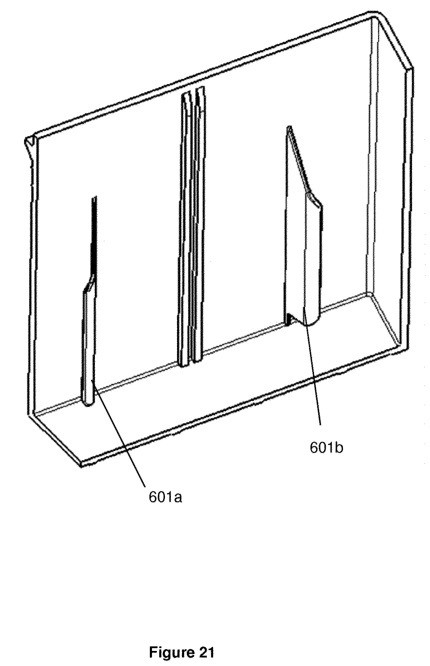

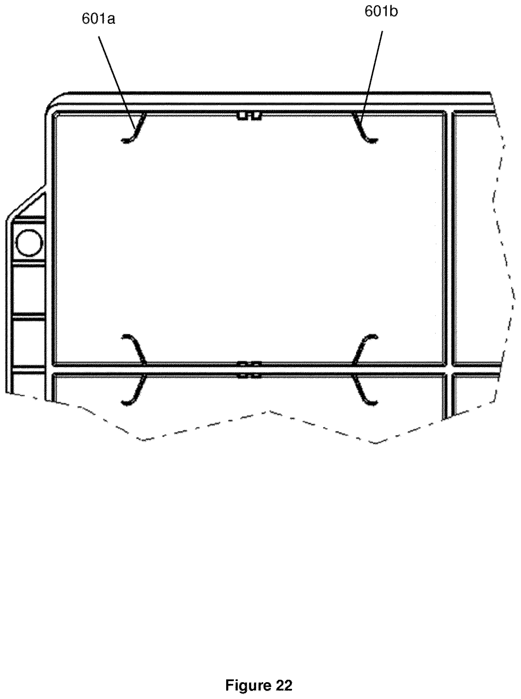

Figures 21 and 22 show a further embodiment of the present invention. This further embodiment comprises a single pair of guides 601a, 601b on each sidewall/partition of a pair of opposing sidewalls/partitions. A spacing between each guide 601a, 601b is greater than the spacing between each guide 6a, 6b, 8a, 8b in the embodiments shown in figure 1. By spacing the guides 601a, 601b further apart, a tendency for a battery, plates or the likes to pivot or rock on the guides in use is reduced.

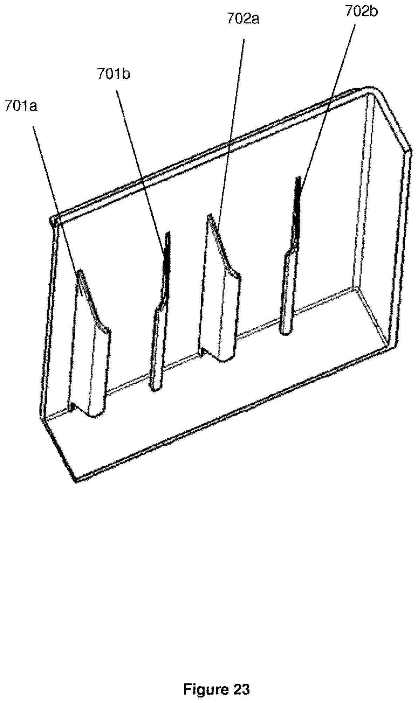

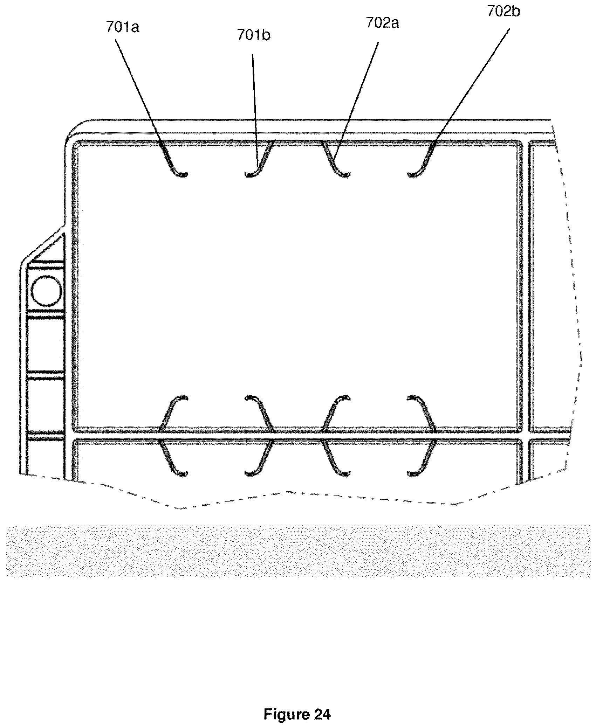

Figures 23 and 24 show a further embodiment of the present invention. This further embodiment comprises two pairs of guides 701a, 701b, 702a, 702b on each sidewall/partition of a pair of opposing sidewalls/partitions. The guides701a, 701b, 702a, 702b are adapted such that each guide of the pair of guides701a, 701b, 702a, 702b is adapted to curve towards the other guide of the pair of guides 701a, 701b, 702a, 702b.

A spacing between each guide of a pair of guides 701a, 701b, 702a, 702b is greater than the spacing between each guide of a pair of guides 6a, 6b, 8a, 8b in the embodiments shown in figure 1. By spacing the guides further apart, a tendency for one or more cell elements, plates or the likes to pivot or rock on the guides in use is reduced.

It will be understood by one of skill in the art that any of the described embodiments will not be limited to a single pair or two pairs of guides on a sidewall of a compartment and that a greater quantity of pairs of guides may be implemented without deviating from the inventive concept described herein.
guide 601a, 601b is greater than the spacing between each guide 6a, 6b, 8a, 8b in the embodiments shown in figure 1. By spacing the guides 601a, 601b further apart, a tendency for a battery, plates or the likes to pivot or rock on the guides in use is reduced.

Figures 23 and 24 show a further embodiment of the present invention. This further embodiment comprises two pairs of guides 701a, 701b, 702a, 702b on each sidewall/partition of a pair of opposing sidewalls/partitions. The guides701a, 701b, 702a, 702b are adapted such that each guide of the pair of guides701a, 701b, 702a, 702b is adapted to curve towards the other guide of the pair of guides 701a, 701b, 702a, 702b.

A spacing between each guide of a pair of guides 701a, 701b, 702a, 702b is greater than the spacing between each guide of a pair of guides 6a, 6b, 8a, 8b in the embodiments shown in figure 1. By spacing the guides further apart, a tendency for one or more cell elements, plates or the likes to pivot or rock on the guides in use is reduced.

It will be understood by one of skill in the art that any of the described embodiments will not be limited to a single pair or two pairs of guides on a sidewall of a compartment and that a greater quantity of pairs of guides may be implemented without deviating from the inventive concept described herein.

## Claims

1. A battery container (1) having at least one compartment suitable for receiving one or more battery plates, wherein the at least one compartment has a substantially planar pair of two opposing sidewalls (2a, 2b, 2c, 2d) which are arranged at right angles to one another such that the battery container (1) is substantially square or rectangular when viewed from above, a substantially planar floor (4) which extends between a lower end of the sidewalls and at least two guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or ribs (18a, 18b, 60a, 60b) arranged on a surface of at least one of the sidewalls (2a, 2b, 2c, 2d), wherein the at least two guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or ribs (18a, 18b, 60a, 60b) extend from a respective sidewall and define in normal, relaxed or unloaded conditions, namely when no external object is placed in the container and/or contacts each guide or rib, at least one curved portion (14a, 14b, 16a, 16b, 74a, 74b, 76a, 76b) in a direction extending from the inner surface of a respective sidewall (2a, 2b, 2c, 2d) to a distalmost edge (28a, 28b, 30a, 30b) of the at least two guides or ribs which are distal from the sidewall and wherein at least a portion of a lower end or edge (10a, 10b, 12a, 12b, 302a, 302b, 20a, 20b) of each guide or rib does not extend the floor (4).

2. The battery container (1) of claim 1, wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is provided separate or distinct from any other guide or rib.

3. The battery container (1) of any preceding claim, wherein: each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) extends in a direction orthogonal to the floor (4); or wherein the guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or ribs (18a, 18b, 60a, 60b) are attached to, connected to or fixed to or formed unitary with a respective sidewall; or wherein the at least one compartment has a plurality of guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or ribs (18a, 18b, 60a, 60b), or wherein at least one guide or rib is located one a respective sidewall and the other at least one guide or rib is located on an opposing sidewall.

4. The battery container (1) of any preceding claim, wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b,60a, 60b) is adapted to flex or undergo elastic deformation upon insertion of at least one battery and/or plate and/or cell into the container (1), and wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is arranged to protrude from and/or extend from an inner surface at an angle of between 90 degrees and 45 degrees from the surface.

5. The battery container (1) of any preceding claim, wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b,60a, 60b) of a pair of guides or ribs is adapted to curve away from the other guide or rib of the pair of guides or ribs, or wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) of a pair of guides or ribs is adapted to curve towards the other guide or rib of the pair of guides or ribs.

6. The battery container (1) of any preceding claim, wherein a straight edge of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b,60a, 60b) is a base (24a, 24b, 26a, 26b) of each guide or rib, and adjoins the inner surface or sidewall, and wherein each guide(6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is substantially thicker at the base than at a distalmost edge.

7. The battery container (1) of any preceding claim, wherein the thickness of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is varied such that a degree of flexing or deformation of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b,60a, 60b) is distributed across a length of the guide or rib in a predetermined manner.

8. The battery container (1) of any preceding claim, wherein an upper end (32a, 32b, 34a, 34b, 22a, 22b) of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is tapered, curved or chamfered inwards towards the inner surface and wherein the at least one curved portion (14a, 14b, 16a, 16b, 74a, 74b, 76a, 76b) is arranged at least one of:
the distalmost edge (28a, 28b, 30a, 30b) of each guide or rib,
a base (24a, 24b, 26a, 26b) of each guide or rib, and/or
a point between the base (24a, 24b, 26a, 26b) and the distalmost edge 28a, 28b, 30a, 30b) of each guide or rib.

9. The battery container (1) of any preceding claim, wherein a degree of curvature of the at least one curved portion (14a, 14b, 16a, 16b, 74a, 74b, 76a, 76b) of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is between 30 and 120 degrees, and/or wherein a radius of curvature of the at least one curved portion (14a, 14b, 16a, 16b, 74a, 74b, 76a, 76b) of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) is between 0.5 and 10 millimetres.

10. The battery container (1) of any preceding claim wherein at least a portion of a lower end or edge (10a, 10b, 12a, 12b, 302a, 302b, 20a, 20b) of each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) which defines at least one curved portion does not extend the floor (4) and when subjected to forces of up to approximately 300N to 500N, the two pairs of guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or ribs (18a, 18b, 60a, 60b) with the at least one curved portion on each guide or rib deform by approximately 2mm to 8mm.

11. The battery container (1) of any preceding claim wherein one guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) of a pair of guides or ribs is arranged symmetrically with the other guide or rib of the pair of guides or ribs along an axis which is orthogonal to the floor, or wherein each guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) or rib (18a, 18b, 60a, 60b) of a pair of guides or ribs is arranged asymmetrically along an axis which is orthogonal to the floor; or wherein a pair of guides or ribs is arranged to be directly opposite another pair of guides or ribs within the at least one compartment; or wherein a plurality of pairs of guides or ribs is arranged on the inner surface.

12. A method of constructing a battery container (1) according to any preceding claim, the method comprising the step of forming the battery container (1) within a mould.

## Patentansprüche

1. Batteriebehälter (1) mit mindestens einem Fach, das zur Aufnahme einer oder mehrerer Batterieplatten geeignet ist, wobei das mindestens eine Fach ein im Wesentlichen ebenes Paar von zwei gegenüberliegenden Seitenwänden (2a, 2b, 2c, 2d) aufweist, die rechtwinklig zueinander angeordnet sind, so dass der Batteriebehälter (1) von oben gesehen im Wesentlichen quadratisch oder rechteckig ist, einem im Wesentlichen ebenen Boden (4), der sich zwischen einem unteren Ende der Seitenwände und mindestens zwei Führungen (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippen (18a, 18b, 60a, 60b), die an einer Oberfläche von mindestens einer der Seitenwände (2a, 2b, 2c, 2d) angeordnet sind, erstreckt, wobei die mindestens zwei Führungen (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippen (18a, 18b, 60a, 60b) sich von einer jeweiligen Seitenwand erstrecken und im normalen, entspannten oder unbelasteten Zustand, und zwar wenn kein äußerer Gegenstand in den Behälter gelegt wird und/oder jede Führung oder Rippe berührt, mindestens einen gekrümmten Abschnitt (14a, 14b, 16a, 16b, 74a, 74b, 76a, 76b) in einer Richtung definieren, die sich von der Innenfläche einer jeweiligen Seitenwand (2a, 2b, 2c, 2d) zu einer distalsten Kante (28a, 28b, 30a, 30b) der mindestens zwei Führungen oder Rippen erstreckt, die von der Seitenwand entfernt sind, und wobei mindestens ein Abschnitt eines unteren Endes oder einer Kante (10a, 10b, 12a, 12b, 302a, 302b, 20a, 20b) jeder Führung oder Rippe den Boden (4) nicht verlängert.

2. Batteriebehälter (1) nach Anspruch 1, wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 5016, 601a, 601b, 701a, 701b, 702a, 702b) oder Rippe (18a, 18b, 60a, 60b) separat oder getrennt von anderen Führungen oder Rippen bereitgestellt ist.

3. Batteriebehälter (1) nach einem der vorhergehenden Ansprüche, wobei: jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) in einer Richtung orthogonal zum Boden (4) verläuft; oder wobei die Führungen (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippen (18a, 18b, 60a, 60b) an einer jeweiligen Seitenwand angebracht, mit ihr verbunden oder an ihr befestigt oder mit ihr einstückig ausgebildet sind, oder wobei das mindestens ein Fach eine Vielzahl von Führungen (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippen (18a, 18b, 60a, 60b) aufweist, oder wobei sich mindestens eine Führung oder Rippe an einer jeweiligen Seitenwand und die andere mindestens eine Führung oder Rippe an einer gegenüberliegenden Seitenwand befindet.

4. Batteriebehälter (1) nach einem der vorhergehenden Ansprüche, wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) geeignet ist, sich zu biegen oder eine elastische Verformung zu erfahren, wenn mindestens eine Batterie und/oder eine Platte und/oder eine Zelle in den Behälter (1) eingesetzt wird, und wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) so angeordnet ist, dass sie von einer inneren Oberfläche in einem Winkel zwischen 90 Grad und 45 Grad von der Oberfläche absteht und/oder sich von ihr erstreckt.

5. Batteriebehälter (1) nach einem der vorhergehenden Ansprüche, wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) eines Paares von Führungen oder Rippen so angepasst ist, dass sie sich von der anderen Führung oder Rippe des Paares von Führungen oder Rippen wegbiegt, oder wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) eines Paares von Führungen oder Rippen so angepasst ist, dass sie sich in Richtung der anderen Führung oder Rippe des Paares von Führungen oder Rippen biegt.

6. Batteriebehälter (1) nach einem der vorhergehenden Ansprüche, wobei eine gerade Kante jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) eine Basis (24a, 24b, 26a, 26b) einer jeden Führung oder Rippe ist, und an die innere Oberfläche oder Seitenwand angrenzt, und wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) an der Basis wesentlich dicker als an einer distalsten Kante.

7. Batteriebehälter (1) nach einem der vorhergehenden Ansprüche, wobei die Dicke jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) so verändert wird, dass ein Grad der Biegung oder Verformung jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) in einer vorbestimmten Weise über eine Länge der Führung oder Rippe verteilt ist.

8. Batteriebehälter (1) nach einem der vorhergehenden Ansprüche, wobei ein oberes Ende (32a, 32b, 34a, 34b, 22a, 22b) jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) nach innen zur Innenfläche hin verjüngt, gekrümmt oder abgeschrägt ist und wobei der mindestens eine gekrümmte Abschnitt (14a, 14b, 16a, 16b, 74a, 74b, 76a, 76b) an mindestens einer der folgenden Stellen angeordnet ist:
an der distalsten Kante (28a, 28b, 30a, 30b) jeder Führung oder Rippe,
an einer Basis (24a, 24b, 26a, 26b) jeder Führung oder Rippe, und/oder
an einem Punkt zwischen der Basis (24a, 24b, 26a, 26b) und der distalsten Kante (28a, 28b, 30a, 30b) jeder Führung oder Rippe.

9. Batteriebehälter (1) nach einem der vorhergehenden Ansprüche, wobei ein Krümmungsgrad des mindestens einen gekrümmten Abschnitts (14a, 14b, 16a, 16b, 74a, 74b, 76a, 76b) jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) zwischen 30 und 120 Grad beträgt, und/oder wobei ein Krümmungsradius des mindestens einen gekrümmten Abschnitts (14a, 14b, 16a, 16b, 74a, 74b, 76a, 76b) jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) zwischen 0,5 und 10 Millimetern liegt.

10. Batteriebehälter (1) nach einem der vorhergehenden Ansprüche, wobei mindestens ein Abschnitt eines unteren Endes oder Kante (10a, 10b, 12a, 12b, 302a, 302b, 20a, 20b) jeder Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b), die mindestens einen gekrümmten Abschnitt definiert, den Boden (4) nicht verlängert und die beiden Führungspaare (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippen (18a, 18b, 60a, 60b), mit dem mindestens einen gekrümmten Abschnitt an jeder Führung oder Rippe sich um etwa 2 mm bis 8 mm verformen, wenn sie Kräften von bis zu 300 N bis 500 N ausgesetzt sind.

11. Batteriebehälter (1) nach einem der vorhergehenden Ansprüche, wobei eine Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) eines Paars von Führungen oder Rippen symmetrisch mit der anderen Führung oder Rippe des Paars von Führungen oder Rippen entlang einer Achse angeordnet ist, die orthogonal zum Boden verläuft, oder wobei jede Führung (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) oder Rippe (18a, 18b, 60a, 60b) eines Paars von Führungen oder Rippen asymmetrisch entlang einer Achse angeordnet ist, die orthogonal zum Boden verläuft; oder wobei ein Paar von Führungen oder Rippen so angeordnet ist, dass es einem anderen Paar von Führungen oder Rippen in dem mindestens einen Fach direkt gegenüberliegt; oder wobei eine Vielzahl von Paaren von Führungen oder Rippen auf der Innenfläche angeordnet sind.

12. Verfahren zum Herstellen eines Batteriebehälters (1) nach einem der vorhergehenden Ansprüche, wobei das Verfahren den Schritt des Formens des Batteriebehälters (1) in einer Form umfasst.

## Revendications

1. Bac de batterie(s) (1) comportant au moins un compartiment adapté pour recevoir une ou plusieurs plaques de batterie, dans lequel l'au moins un compartiment comporte une paire sensiblement plane de deux parois latérales opposées (2a, 2b, 2c, 2d) qui sont agencées à angles droits l'une par rapport à l'autre de telle sorte que le bac de batterie(s) (1) soit sensiblement carré ou rectangulaire vu du dessus, un fond sensiblement plan (4) qui s'étend entre une extrémité inférieure des parois latérales et au moins deux guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervures (18a, 18b, 60a, 60b) agencé(e)s sur une surface d'au moins une des parois latérales (2a, 2b, 2c, 2d), dans lequel les au moins deux guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervures (18a, 18b, 60a, 60b) s'étendent depuis une paroi latérale respective et définissent, dans des conditions normales, relaxées ou déchargées, c'est-à-dire lorsqu'aucun objet externe n'est placé dans le bac et/ou n'entre en contact avec chaque guide ou nervure, au moins une partie incurvée (14a, 14b, 16a, 16b, 74a, 74b, 76a, 76b) dans une direction s'étendant depuis la surface interne d'une paroi latérale respective (2a, 2b, 2c, 2d) jusqu'à un bord le plus distal (28a, 28b, 30a, 30b) des au moins deux guides ou nervures qui sont distaux/distales par rapport à la paroi latérale et dans lequel au moins une partie d'une extrémité inférieure ou d'un bord inférieur (10a, 10b, 12a, 12b, 302a, 302b, 20a, 20b) de chaque guide ou nervure ne prolonge pas le fond (4).

2. Bac de batterie(s) (1) selon la revendication 1, dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est prévu(e) de manière à être séparé(e) ou distinct(e) d'un(e) quelconque autre guide ou nervure.

3. Bac de batterie(s) (1) selon l'une quelconque des revendications précédentes, dans lequel : chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) s'étend dans une direction orthogonale au fond (4) ; ou dans lequel les guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervures (18a, 18b, 60a, 60b) sont lié(e)s, connectées ou fixé(e)s à une paroi latérale respective ou sont formé(e)s d'un seul tenant avec celle-ci ; ou dans lequel l'au moins un compartiment comporte une pluralité de guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou de nervures (18a, 18b, 60a, 60b), ou dans lequel au moins un guide ou une nervure est localisé(e) sur une paroi latérale respective et l'autre au moins un guide ou une nervure est localisé(e) sur une paroi latérale opposée.

4. Bac de batterie(s) (1) selon l'une quelconque des revendications précédentes, dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est adapté(e) pour être fléchi(e) ou pour subir une déformation élastique lors de l'insertion d'au moins une batterie et/ou plaque et/ou cellule dans le bac (1), et dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est agencé(e) de manière à faire saillie et/ou à s'étendre depuis une surface interne selon un angle compris entre 90 degrés et 45 degrés par rapport à la surface.

5. Bac de batterie(s) (1) selon l'une quelconque des revendications précédentes, dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) d'une paire de guides ou de nervures est adapté(e) pour se courber en s'éloignant de l'autre guide ou nervure de la paire de guides ou de nervures, ou dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) d'une paire de guides ou de nervures est adapté(e) pour se courber vers l'autre guide ou nervure de la paire de guides ou de nervures.

6. Bac de batterie(s) (1) selon l'une quelconque des revendications précédentes, dans lequel un bord rectiligne de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est une base (24a, 24b, 26a, 26b) de chaque guide ou nervure, et jouxte la surface interne ou la paroi latérale, et dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est sensiblement plus épais(se) au niveau de la base qu'au niveau d'un bord le plus distal.

7. Bac de batterie(s) (1) selon l'une quelconque des revendications précédentes, dans lequel l'épaisseur de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) varie de telle sorte qu'un degré de flexion ou de déformation de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) soit distribué sur une longueur du guide ou de la nervure d'une manière prédéterminée.

8. Bac de batterie(s) (1) selon l'une quelconque des revendications précédentes, dans lequel une extrémité supérieure (32a, 32b, 34a, 34b, 22a, 22b) de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) présente une conicité, est incurvée ou est chanfreinée vers l'intérieur en direction de la surface interne et dans lequel l'au moins une partie incurvée (14a, 14b, 16a, 16b, 74a, 74b, 76a, 76b) est agencée au niveau d'au moins un endroit parmi :
le bord le plus distal (28a, 28b, 30a, 30b) de chaque guide ou nervure,
une base (24a, 24b, 26a, 26b) de chaque guide ou nervure, et/ou
un point entre la base (24a, 24b, 26a, 26b) et le bord le plus distal (28a, 28b, 30a, 30b) de chaque guide ou nervure.

9. Bac de batterie(s) (1) selon l'une quelconque des revendications précédentes, dans lequel un degré de courbure de l'au moins une partie incurvée (14a, 14b, 16a, 16b, 74a, 74b, 76a, 76b) de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est compris entre 30 et 120 degrés, et/ou dans lequel un rayon de courbure de l'au moins une partie incurvée (14a, 14b, 16a, 16b, 74a, 74b, 76a, 76b) de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) est compris entre 0,5 et 10 millimètres.

10. Bac de batterie(s) (1) selon l'une quelconque des revendications précédentes, dans lequel au moins une partie d'une extrémité inférieure ou d'un bord inférieur (10a, 10b, 12a, 12b, 302a, 302b, 20a, 20b) de chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) qui définit au moins une partie incurvée ne prolonge pas le fond (4) et, lorsqu'elles sont soumises à des forces jusqu'à approximativement 300 N à 500 N, les deux paires de guides (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou de nervures (18a, 18b, 60a, 60b), avec l'au moins une partie incurvée sur chaque guide ou nervure, se déforment d'approximativement 2 mm à 8 mm.

11. Bac de batterie(s) (1) selon l'une quelconque des revendications précédentes, dans lequel un guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou une nervure (18a, 18b, 60a, 60b) d'une paire de guides ou de nervures est agencé(e) de façon symétrique par rapport à l'autre guide ou nervure de la paire de guides ou de nervures suivant un axe qui est orthogonal au fond, ou dans lequel chaque guide (6a, 6b, 8a, 8b, 56a, 56b, 58a, 58b, 90a, 90b, 92a, 92b, 106a, 106b, 108a, 108b, 206a, 206b, 208a, 208b, 290a, 290b, 292a, 292b, 300a, 300b, 411a, 411b, 412a, 412b, 501a, 501b, 601a, 601b, 701a, 701b, 702a, 702b) ou nervure (18a, 18b, 60a, 60b) d'une paire de guides ou de nervures est agencé(e) de façon asymétrique suivant un axe qui est orthogonal au fond ; ou dans lequel une paire de guides ou de nervures est agencée de manière à être directement opposée à une autre paire de guides ou de nervures à l'intérieur de l'au moins un compartiment ; ou dans lequel une pluralité de paires de guides ou de nervures sont agencé(e)s sur la surface interne.

12. Procédé de construction d'un bac de batterie(s) (1) selon l'une quelconque des revendications précédentes, le procédé comprenant l'étape de formage du bac de batterie(s) (1) à l'intérieur d'un moule.
